(19) **Europäisches Patentamt**
**European Patent Office**
**Office européen des brevets**

(11) Veröffentlichungsnummer : **0 333 807 B1**

(12) **EUROPÄISCHE PATENTSCHRIFT**

(45) Veröffentlichungstag der Patentschrift :
04.12.91 Patentblatt 91/49

(51) Int. Cl.$^5$ : **A23L 2/30**

(21) Anmeldenummer : 88908128.7

(22) Anmeldetag : 30.09.88

(86) Internationale Anmeldenummer :
PCT/CH88/00177

(87) Internationale Veröffentlichungsnummer :
WO 89/02708 06.04.89 Gazette 89/08

(54) **VERFAHREN ZUR KLÄRUNG VON FLÜSSIGKEITEN, INSBESONDERE ROHSAFT, SOWIE ANLAGE ZUR DURCHFÜHRUNG DES VERFAHRENS.**

(30) Priorität : 02.10.87 CH 3852/87

(43) Veröffentlichungstag der Anmeldung :
27.09.89 Patentblatt 89/39

(45) Bekanntmachung des Hinweises auf die
Patenterteilung :
04.12.91 Patentblatt 91/49

(84) Benannte Vertragsstaaten :
AT CH DE FR GB IT LI NL SE

(56) Entgegenhaltungen :
EP-A- 0 174 594
FR-A- 2 562 392
FR-A- 2 582 230
GB-A- 2 163 062

(73) Patentinhaber : BUCHER-GUYER AG
Maschinenfabrik
CH-8166 Niederweningen/Zürich (CH)

(72) Erfinder : HARTMANN, Eduard
Im Hofacher 420
CH-5425 Schneisingen (CH)

EP 0 333 807 B1

## Beschreibung

Die Erfindung betrifft ein Verfahren zur Klärung von Flüssigkeiten, insbesondere Rohsaft aus Obst, Trauben, Beeren oder anderen Früchten und Gemüsen mittels Ultra- oder Mikrofiltration.

Bei den bekannten Verfahren der Mikrofiltration und der Ultrafiltration werden meist rohr- oder plattenförmige Mmebranfiltrationsmodule eingesetzt. Die zu klärende bzw. zu filtrierende Flüssigkeit strömt quer zur Filtrationseinrichtung über die Membranfilterfläche. Dabei wird der geklärte Saft, das Permeat, von der die Filtratrückstände enthaltenden Flüssigkeit, das Retentat, abgetrennt. Dieser Vorgang wird in einem Kreislauf des Retentates öfters wiederholt. Im Chargenbetrieb nimmt dabei die Konzentration der Filtratrückstände, der sogenannte Feststoffanteil, laufend zu.

Der Nachteil dieser bekannten Verfahren besteht darin, dass mit zunehmender Filtrationszeit und zunehmendem Feststoffanteil im Retentat eine Abnahme der Filtrationsleistung, das ist z.B. die Permeatabflussmenge pro Filtrationsflächen- und Zeiteinheit, eintritt. Diese Abnahme der Filtrationsleistung kann weniger als die Hälfte des Anfangswertes betragen. Für die Erreichung einer bestimmten Filtrationsleistung muss daher bei der Auslegung von Ultra- oder Mikrofiltrationsanlagen mit dem reduzierten Filtrationsleistungs-Wert gerechnet werden. Dies erfordert aber grosse Filtrationsflächen und führt zu teuren, teils unwirtschaftlichen Anlagen mit einer grossen Anzahl von Filtrationsmodulen.

Der Erfindung liegt die Aufgabe zugrunde, die genannten Nachteile zu vermeiden und ein Verfahren zu entwickeln, das bei verringerten Investitionskosten eine hohe Filtrationsleistung gewährleistet.

Diese Aufgabe wird gemäss der Erfindung dadurch gelöst, dass der Feststoffanteil im Retentat durch Aufkonzentrierung während der Anfahrzeit rasch erhöht wird und nach Erreichen der maximalen Filtrationsleistung durch Regelung konstant gehalten wird. Dadurch kann der zunächst abnehmende und bei weiterer Zunahme des Feststoffanteils wieder ansteigende Filtrationsleistung auf einem weit über dem Anfangswert liegenden Niveau gehalten werden.

Zur Feststellung des Feststoffanteils und zur Regelung des Retentatzustandes wird der Feststoffanteil oder eine andere, vom Feststoffanteil abhängige Grösse im Retentatkreislauf gemessen und die Messgrösse zur Regelung der Retentatabflussmenge oder der Frischsaftzuführmenge verwendet.

In einer anderen Ausführung der Erfindung wird zur Regelung des Retentatzustandes die Permeatabflussmenge bzw. die Filtrationsleistung gemessen und die Messgrösse zur Regelung der Retentatabflussmenge oder der Frischsaftzuführmenge verwendet. Die Messung des Feststoffanteils kann hierbei entfallen, da der Retentatzustand weitgehend auch von der Filtrationsleistung abhängig ist.

Ein weiteres Ausführungsbeispiel der Erfindung sieht zur Regelung des Retentatzustandes vor, dass sowohl der Feststoffanteil oder eine andere, vom Feststoffanteil abhängige Grösse, als auch die Permeatabflussmenge bzw. die Filtrationsleistung gemessen werden, wobei der Sollwert des Feststoffanteils durch den am Anfang des Prozesses maximal erreichbaren Filtrationsleistungs-Wert bestimmt wird. Die Regelung des Retentatzustandes erfolgt dabei in Abhängigkeit vom Feststoffanteil, dessen Sollwert aber nicht als Erfahrungswert vorgegeben ist, sondern durch laufende Filtrationsleistungs-Messung ermittelt wird.

Um während der Anfahrzeit eine möglichst hohe Konzentration des Feststoffanteils im Retentat in möglichst kurzer Zeit zu erhalten, wird zunächst eine relativ kleine Retentatmenge verwendet und der restliche Teil der Chargenmenge erst nach dem Erreichen des Sollwertes des Feststoffanteils dem Retentatkreislauf zugeführt.

Die Anlage zur Durchführung des Verfahrens gemäss der Erfindung ist dadurch gekennzeichnet, dass im Retentatkreislauf einer Ultra- oder Mikrofiltrationseinrichtung eine Messeinrichtung zur Messung des Feststoffanteils angeordnet ist, die über eine Messleitung mit einer Regeleinrichtung zur Regelung des Retentatzustandes verbunden ist.

Bei einer anderen Ausführung der erfindungsgemässen Anlage ist in der Permeatabflussleitung der Ultraoder Mikrofiltrationseinrichtung eine Messeinrichtung zur Messung der Permeatabflussmenge bzw. der Filtrationsleistung angeordnet, die über eine Messleitung mit der Regeleinrichtung zur Regelung des Retentatzustandes verbunden ist.

In einer weiteren Ausführungsform der erfindungsgemässen Anlage ist die Messeinrichtung für die Filtrationsleistung zusätzlich zur Messeinrichtung für den Feststoffanteil vorgesehen, wobei die Messeinrichtungen durch Messleitungen mit der Regeleinrichtung zur Regelung des Retentatzustandes verbunden sind.

Gemäss der Erfindung kann die Regelung des Retentatzustandes durch Regulierung der Retentatabflussmenge erfolgen, wobei die Regeleinrichtung durch eine Steuerleitung mit einem Regelventil verbunden ist, das in einer vom Retentatkreislauf abgezweigten Retentatabflussleitung angeordnet ist.

Nach einem weiteren Erfindungsmerkmal kann die Regelung des Retentatzustandes durch Regulierung der Frischsaftzuführmenge erfolgen, wobei die Regeleinrichtung durch eine Steuerleitung mit einem Regelventil verbunden ist, das in einer Frischsaftzuführleitung angeordnet ist.

2

Die mit der Erfindung erzielten Vorteile bestehen insbesondere darin, dass durch die Konstanthaltung des Feststoffanteils im Retentat auf einem bestimmten Wert sehr hohe Filtrationsleistungs-Werte erreicht werden. Die Anzahl der Filter-Module kann verringert werden, da die Einsparung an Filtrationsfläche ca. 50 % beträgt. Dies erlaubt den Einsatz von Ultra- oder Mikrofiltrationsanlagen mit hoher Leistung bei geringem Platzbedarf und reduziertem Investitionsaufwand. Dadurch ergibt sich eine hohe Wirtschaftlichkeit der Anlage. Auch die Anfahr-Filtrationsleistungs-Verluste sind gegenüber konventionellen Verfahren wesentlich geringer, da mit einer kleinen Retentatmenge in kurzer Zeit auf einen hohen Konzentrationsfaktor gefahren wird. Die Umwälzmengen sind relativ gering und es können kurze Leitungen verwendet werden. Die Druck- und Energieverluste sind ebenfalls gering.

Die Erfindung ist in der folgenden Beschreibung und der Zeichnung, die mehrere Ausführungsbeispiele darstellt, näher erläutert. Es zeigen :

Fig. 1    eine schematische Darstellung der Anlage gemäss der Erfindung, mit Feststoffanteil als Messgrösse und Retentatabflussmenge als Stellgrösse,

Fig. 2    eine andere Ausführungsform der erfindungsgemässen Anlage mit Feststoffanteil als Messgrösse und Frischsaftzuführmenge als Stellgrösse und

Fig. 3    eine weitere Ausführungsform der erfindungsgemässen Anlage mit Permeatabflussmenge (Filtrationsleistung) als Messgrösse und Retentatabflussmenge als Stellgrösse.

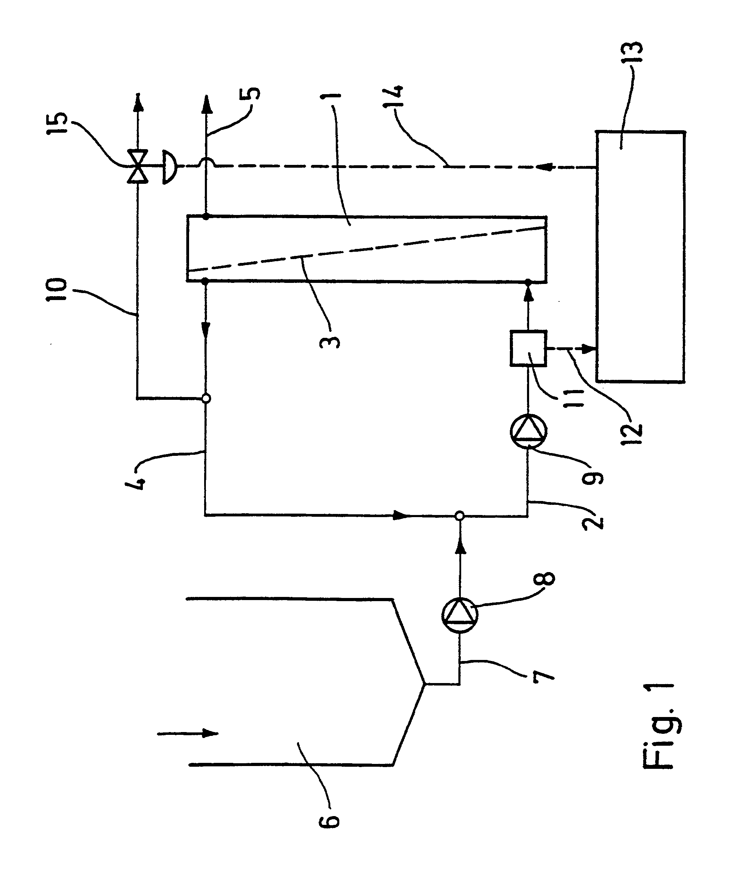

Die Anlage nach Fig. 1 besteht aus einer Ultra- oder Mikrofiltrationseinrichtung 1 mit einem Retentatkreislauf, der durch eine Zuführleitung 2, eine retentatseitige Filterfläche 3 und eine Rückführleitung 4 gebildet wird. Auf der Permeatseite der Ultra- oder Mikrofiltrationseinrichtung 1 wird der filtrierte Klarsaft über eine Permeatabflussleitung 5 abgeführt. Dem Retentatkreislauf wird der zu filternde Rohsaft von einem Chargenbehälter 6 aus über eine Leitung 7 zugeführt. In der Leitung 7 ist eine Förderpumpe 8 und in der Zuführleitung 2 des Retentatkreislaufes eine Umwälzpumpe 9 angeordnet. Von der Rückführleitung 4 zweigt eine Retentatabflussleitung 10 ab, die zu einem nicht dargestellten Sammelbehälter für das Retentat führt.

In der Zuführleitung 2 des Retentatkreislaufes ist eine Messeinrichtung 11 angeordnet, durch die der Feststoffanteil im Retentat gemessen wird. Die festgestellte Messgrösse wird über eine Messleitung 12 ständig an eine Regeleinrichtung 13 übermittelt. Von der Regeleinrichtung 13 führt eine Steuerleitung 14 zu einem Regelventil 15, das in der Retentatabflussleitung 10 angeordnet ist.

In den Chargenbehälter 6 wird zunächst nur eine kleine Menge des zu filtrierenden Rohsaftes eingegeben. Der Rohsaft gelangt über die Leitung 7 in den Retentatkreislauf und wird durch die Umwälzpumpe 9 in einem sich öfters wiederholenden Kreislauf an der Filterfläche 3 vorbeigeführt, die den Klarsaft vom Rohsaft abtrennt. Mit zunehmender Aufkonzentrierung des Retentates fällt die Filtrationsleistung zunächst etwa auf die Hälfte des Anfangswertes ab und steigt bei weiterer Zunahme des Feststoffanteils wieder auf einen Wert an, der weit über dem Anfangswert liegt. Diese durch Versuche festgestellte, erhebliche Verbesserung der Filtrationsleistung ist darauf zurückzuführen, das mit höherer Konzentration des Feststoffanteils im Retentat das Strömungsverhalten verändert wird. Es wird angenommen, dass ab einer gewissen Feststoff-Konzentration die Strömung von einem newtonschen Verhalten in eine Art von Blockströmung übergeht. Die Strömungsgrenzschicht an der Filterwand nimmt an Geschwindigkeit stark zu und vermindert sich auf eine wesentlich kleinere Schichtdicke. Mit diesem Effekt gelangt frisches Retentat wesentlich schneller an die Filteroberfläche und bewirkt eine verbesserte Reinigung der Filtrationsschicht mittels der Feststoffanteile im Retentat. Dadurch werden weitere Ablagerungen verhindert, die eine Filtrationsleistungs-Reduzierung verursachen könnten.

Nimmt jedoch der Feststoffanteil im Retentat noch weiter zu, so wird nur noch ein geringer weiterer Filtrationsleistungsanstieg erreicht und bei noch weiterer Zunahme des Feststoffanteils wird der Kreislauf infolge zu hohen Feststoffanteils unterbrochen. Der durch Versuche festgestellte Erfahrungswert des Feststoffanteils, bei dem die Filtrationsleistung ihr Maximum erreicht, liegt getrocknet, ohne im Wasser lösliche Anteile, für Apfelsäfte bei etwa 5%. Dieser oder ein davon abhängiger Wert wird als Sollwert der Regeleinrichtung 13 vorgegeben. Durch die Messeinrichtung 11 wird der Retentatzustand bzw. der Feststoffanteil im Retentat festgestellt, über die Messleitung 12 weitergegeben und mit dem vorgegebenen Sollwert in der Regeleinrichtung 13 verglichen. Sobald eine Uebereinstimmung vorliegt, wird über die Steuerleitung 14 das Regelventil 15 geöffnet und eine geregelte Menge an Retentat über die Retentatabflussleitung 10 aus dem Retentatkreislauf abgeführt. Gleichzeitig mit dem Oeffnen des Regelventils 15 wird der restliche Teil der Rohsaft-Chargenmenge in den Chargenbehälter 6 eingeleitet und mit Hilfe der Förderpumpe 8 als Frischsaft dem Retentatkreislauf zugeführt. Durch weitere Regelung der Retentatabflussmenge wird der vorgegebene Sollwert des Feststoffanteils und damit die maximale Filtrationsleistung konstant gehalten.

Infolge der geringen Ausgangsmenge an Rohsaft zu Beginn des Verfahrens ist es möglich, die dem vorgegebenen Sollwert des Feststoffanteils entsprechende Aufkonzentrierung des Retentats und damit die maxi-

3

male Filtrationsleistung in kürzester Zeit zu erreichen. Diese Zeitdauer liegt je nach Grösse der verschiedenen Einflussfaktoren zwischen ca. 8 und 20 Minuten.

Anstelle des Feststoffanteils kann mit der Messeinrichtung 11 auch eine andere, vom Feststoffanteil abhängige Grösse wie z.B. Trübung, Viskosität, spezifische Dichte, Druck, Temperatur oder das Strömungsprofil des Retentates gemessen werden. Dabei können auch mehrere Messgrössen zur Erfassung des Retentatzustandes verwendet werden.

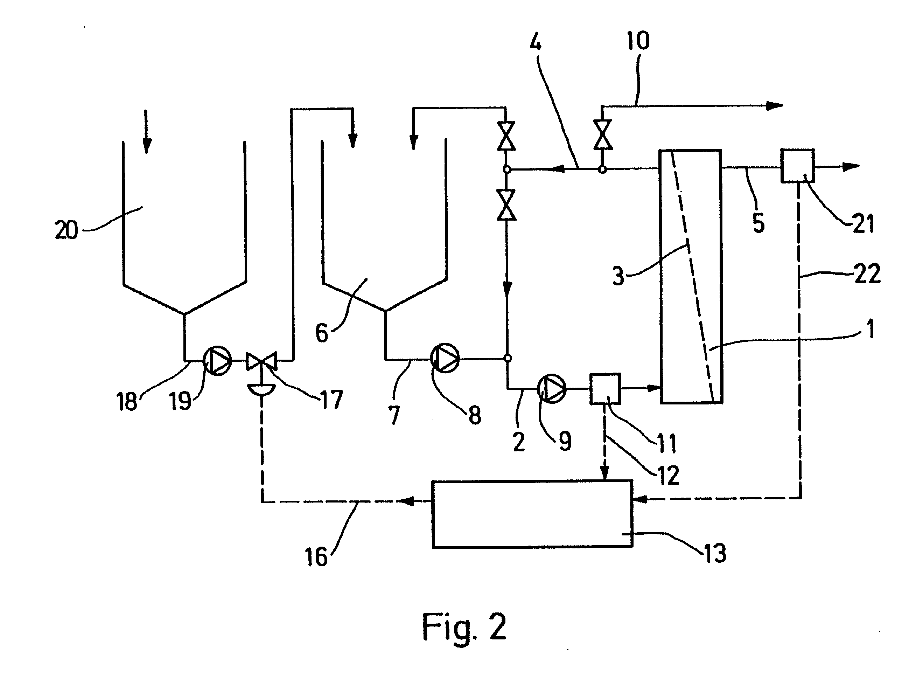

Ein weiteres Ausführungsbeispiel der Erfindung ist in Fig. 2 dargestellt. Hierbei ist die umgewälzte Retentatmenge gegenüber der Ausführung nach Fig. 1 grösser. Dies erlaubt einen etwas trägeren Regelkreis. Die Regelung des Retentatzustandes bzw. die Konstanthaltung des Feststoffanteils erfolgt bei dieser Ausführung nicht über die Retentatabflussmenge, sondern über die Frischsaftzuführmenge. Von der Regeleinrichtung 13 führt eine Steuerleitung 16 zu einem Regelventil 17, das in einer Frischsaftzuführleitung 18 angeordnet ist. Die Frischsaftzuführleitung 18, in der eine Förderpumpe 19 angeordnet ist, führt von einem Frischsaftbehälter 20 zum Chargenbehälter 6. Bei Beginn des Prozesses wird der Feststoffanteil im Retentat wie bei der Ausführung gemäss Fig. 1 rasch hochgefahren und mit Hilfe der Messeinrichtung 11 im Retentatkreislauf 2, 3, 4 gemessen. Gleichzeitig wird durch eine weitere, in der Permeatabflussleitung 5 angeordnete Messeinrichtung 21 die Durchflussmenge des Permeats gemessen, die der Filtrationsleistung entspricht. Die Messgrösse wird über eine Messleitung 22 an die Regeleinrichtung 13 übermittelt. Die Regelung des Feststoffanteils erfolgt somit nicht wie bei der Ausführung gemäss Fig. 1 über einen vorgegebenen Erfahrungswert, sondern durch Beobachtung des Filtrationsleistungs-Verlaufes am Anfang des Prozesses. Sobald die maximal mögliche Filtrationsleistung erreicht ist bzw. der Filtrationsleistungs-Anstieg abnimmt, wird der bis zu diesem Zeitpunkt erreichte Feststoffanteil im Retentat konstant gehalten. Hierzu wird von der Regeleinrichtung 13 über die Steuerleitung 16 das Regelventil 17 geöffnet, sodass Frischsaft vom Behälter 20 in den Chargenbehälter 6 und von dort aus über die Leitung 7 in den Retentatkreislauf 2, 3, 4 gelangen kann. Die Konstanthaltung des Feststoffanteils über die ganze Dauer des Prozesses erfolgt dann wieder über die Messeinrichtung 11, die den gemessenen Feststoffanteil laufend an die Regeleinrichtung 13 weitergibt.

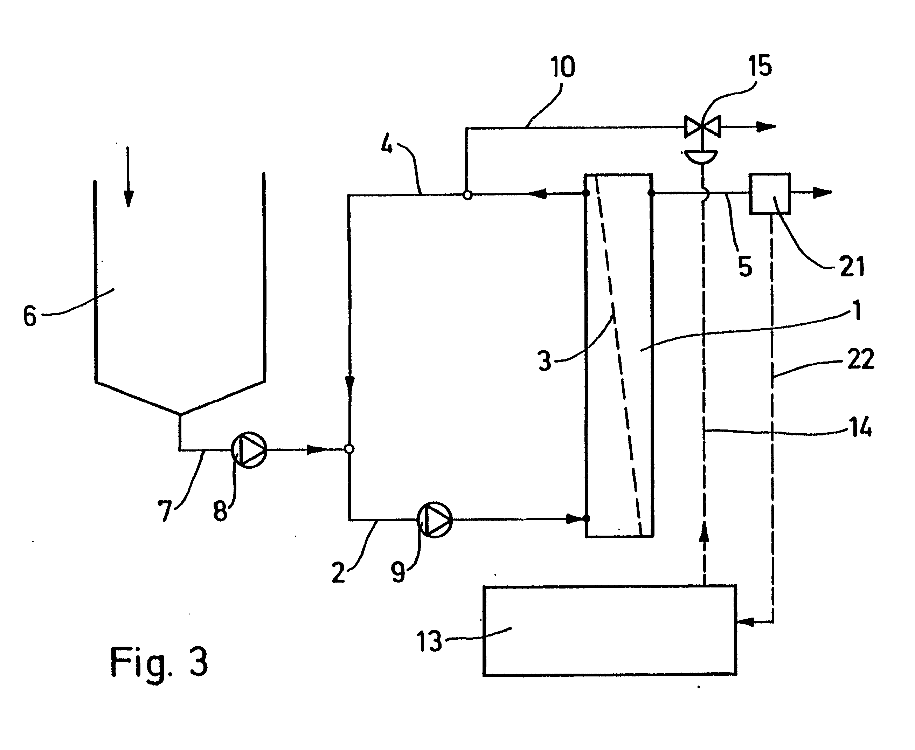

Es ist jedoch auch möglich, die Regelung des Feststoffanteils im Retentat direkt über die Filtrationsleistung, die weitgehend vom Retentatzustand abhängig ist, ohne Messung des Feststoffanteils vorzunehmen. Wie Fig. 3 zeigt, entfällt dabei die Messeinrichtung 11 im Retentatkreislauf 2, 3, 4. In der Messeinrichtung 21, die in der Permeatabflussleitung 5 angeordnet ist, wird die Filtrationsleistung von Anfang an ständig gemessen und die Messgrösse über die Messleitung 22 in die Regeleinrichtung 13 eingegeben. Zu Beginn des Prozesses wird die Anlage auf einen erhöhten Filtrationsleistungs-Wert hochgefahren. Sobald die maximal mögliche Filtrationsleistung erreicht ist bzw. der Filtrationsleistungs-Anstieg abnimmt, wird über die Steuerleitung 14 das Regelventil 15 geöffnet und die Filtrationsleistung bzw. Feststoffanteil im Retentat durch eine geregelte Retentatabfuhr über die ganze Dauer des Prozesses konstant gehalten. Anstelle der Retentatabfuhr kann die Regelung auch durch Frischsaftzufuhr wie im Ausführungsbeispiel nach Fig. 2 erfolgen.

## Patentansprüche

1. Verfahren zur Klärung von Flüssigkeiten, insbesondere Rohsaft aus Obst, Trauben, Beeren oder anderen Früchten und Gemüsen mittels Ultra- oder Mikrofiltration, dadurch gekennzeichnet, dass der Feststoffanteil im Retentat durch Aufkonzentrierung während der Anfahrzeit rasch erhöht wird und nach Erreichen der maximalen Filtrationsleistung durch Regelung konstant gehalten wird.

2. Verfahren nach Anspruch 1, dadurch gekennzeichnet, dass der Feststoffanteil oder eine andere vom Feststoffanteil abhängige Grösse im Retentatkreislauf gemessen wird und die Messgrösse zur Regelung der Retentatabflussmenge oder der Frischsaftzuführmenge verwendet wird.

3. Verfahren nach Anspruch 1, dadurch gekennzeichnet, dass die Permeatabflussmenge bzw. die Filtrationsleistung gemessen wird und die Messgrösse zur Regelung der Retentatabflussmenge oder der Frischsaftzuführmenge verwendet wird.

4. Verfahren nach einem der Ansprüche 1 bis 3, dadurch gekennzeichnet, dass sowohl der Feststoffanteil oder eine andere, vom Feststoffanteil abhängige Grösse als auch die Permeatabflussmenge bzw. die Filtrationsleistung gemessen werden, wobei der Sollwert des Feststoffanteils durch den am Anfang des Prozesses maximal erreichbaren Filtrationsleistungs-Wert bestimmt wird.

5. Verfahren nach einem der Ansprüche 1 bis 4, dadurch gekennzeichnet, dass während der Anfahrzeit des Prozesses nur eine relativ kleine Retentatmenge verwendet wird und der restliche Teil der Chargenmenge erst nach dem Erreichen des Sollwertes des Feststoffanteils dem Retentatkreislauf zugeführt wird.

6. Anlage zur Durchführung des Verfahrens nach einem der Ansprüche 1 bis 5, dadurch gekennzeichnet, dass im Retentatkreislauf (2, 3, 4) einer Ultra- oder Mikrofiltrationseinrichtung (1) eine Messeinrichtung (11)

4

zur Messung des Feststoffanteils angeordnet ist, die über eine Messleitung (12) mit einer Regeleinrichtung (13) zur Regelung des Retentatzustandes verbunden ist.

7. Anlage zur Durchführung des Verfahrens nach einem der Ansprüche 1 bis 6, dadurch gekennzeichnet, dass in der Permeatabflussleitung (5) der Ultra- oder Mikrofiltrationseinrichtung (1) eine Messeinrichtung (21) zur Messung der Filtrationsleistung angeordnet ist, die über eine Messleitung (22) mit der Regeleinrichtung (13) verbunden ist.

8. Anlage nach Anspruch 6 oder 7, dadurch gekennzeichnet, dass die Messeinrichtung (21) für den Flux zusätzlich zur Messeinrichtung (11) für den Feststoffanteil vorgesehen ist, wobei die Messeinrichtungen (21, 11) durch die Messleitungen (22, 12) mit der Regeleinrichtung (13) verbunden sind.

9. Anlage nach einem der Ansprüche 6 bis 8, dadurch gekennzeichnet, dass die Regeleinrichtung (13) über eine Steuerleitung (14) mit einem Regelventil (15) verbunden ist, das zur Regelung der Retentatablussmenge in einer vom Retentatkreislauf (2, 3, 4) abzweigenden Retentatabflussleitung (10) angeordnet, ist.

10. Anlage nach einem der Ansprüche 6 bis 8, dadurch gekennzeichnet, dass die Regeleinrichtung (13) über eine Steuerleitung (16) mit einem Regelventil (17) verbunden ist, das zur Regelung der Frischsaftzufuhr in einer zum Chargenbehälter (6) führenden Frischsaftzuführleitung (18) angeordnet ist.

## Claims

1. A process for the clarifying of liquids, in particular raw juice of fruit, grapes, berries or other fruits and vegetables by means of ultra- or micro- filtration, characterised in that the solid matter content in the retentate is rapidly increased through concentration when the device is started, and after the maximum filtration output is reached, is kept constant through regulation.

2. A process according to Claim 1, characterised in that the solid matter content or another quantity dependent on the solid matter content is measured in the retentate circuit and the measurement quantity is used for the regulating of the retentate outflow or the inflow of fresh juice.

3. A process according to Claim 1, characterised in that the permeate outflow or respectively the filtration output is measured and the measurement quantity is used for the regulating of the retentate outflow or the inflow of fresh juice.

4. A process according to one of Claims 1 to 3, characterised in that both the solid matter content or another quantity dependent on the solid matter content, and also the permeate outflow or respectively the filtration output are measured, in which the nominal value of the solid matter content is determined through the maximum filtration output value which is able to be achieved at the start of the process.

5. A process according to one of Claims 1 to 4, characterised in that during the start-up time of the process, only a relatively small quantity of retentate is used and the remaining portion of the charge quantity is only passed to the retentate circuit after the nominal value of the solid matter content has been reached.

6. An installation to carry out the process according to one of Claims 1 to 5, characterised in that in the retentate circuit (2, 3, 4) of an ultra- or micro- filtration device (1), a measurement device (11) for the measurement of the solid matter content is arranged, which is connected via a measurement line (12) with a regulating device (13) for the regulating of the retentate state.

7. An installation to carry out the process according to one of Claims 1 to 6, characterised in that in the permeate outflow line (5) of the ultra- or micro- filtration device (1), a measurement device (21) for the measurement of the filtration output is arranged, which is connected via a measurement line (22) with the regulating device (13).

8. An installation according to Claim 6 or 7, characterised in that the measurement device (21) for the flux is provided in addition to the measurement device (11) for the solid matter content, in which the measurement devices (21, 11) are connected via the measurement lines (22,12) with the regulating device (13).

9. An installation according to one of Claims 6 to 8, characterised in that the regulating device (13) is connected via a control line (14) with a regulating valve (15), which for the regulating of the retentate outflow is arranged in a retentate outflow line (10) branching off from the retentate circuit (2, 3, 4).

10. An installation according to one of Claims 6 to 8, characterised in that the regulating device (13) is connected via a control line (16) with a regulating valve (17), which for the regulating of the inflow of fresh juice is arranged in a fresh juice inflow line (18) leading to the charge container (6).

## Revendications

1. Procédé pour la clarification de liquides, en particulier de jus brut de fruits d'arbres fruitiers, raisins, baies ou d'autres fruits et de légumes, au moyen d'ultra- ou microfiltration, caractérisé en ce que, pendant le temps de démarrage, on augmente rapidement la fraction de solides dans la phase retenue ou retentat, par concentration et, après que la capacité de filtration minimale a été atteinte, on maintient cette fraction constante par régulation.

2. Procédé selon la revendication 1, caractérisé en ce que l'on mesure la fraction de solides ou une autre grandeur dépendante de la fraction de solides dans le circuit de recyclage de retentat et on utilise la grandeur mesurée pour la régulation du débit de retentat déchargé ou du débit d'alimentation en jus frais.

3. Procédé selon la revendication 1, caractérisé en ce que l'on mesure le débit de perméat déchargé ou la capacité de filtration et on utilise la grandeur mesurée pour la régulation du débit de retentat déchargé ou du débit d'alimentation en jus frais.

4. Procédé selon une des revendications 1 à 3, caractérisé en ce que l'on mesure à la fois la fraction de solides, ou une autre grandeur dépendante de la fraction de solides, et le débit de perméat déchargé ou la capacité de filtration, la valeur de consigne de la fraction de solides étant déterminée par la valeur maximale pouvant être atteinte au début du processus pour la capacité de filtration.

5. Procédé selon une des revendications 1 à 4, caractérisé en ce que, pendant le temps de démarrage du processus, on utilise seulement une quantité relativement faible de retentat et on amène seulement la partie restante d'une charge au circuit de recyclage de retentat après que la valeur de consigne de la fraction de solides a été atteinte.

6. Installation pour la mise en oeuvre du procédé selon une des revendications 1 à 5, caractérisée en ce que le circuit de recyclage de retentat (2, 3, 4) d'un dispositif d'ultra- ou de microfiltration (1) comporte un dispositif de mesure (11) destiné à mesurer la fraction de solides et connecté par une ligne de mesure (12) a un système régulateur (13) pour réguler l'état du retentat.

7. Installation pour la mise en oeuvre du procédé selon une des revendications 1 à 6, caractérisée en ce que la conduite de décharge de perméat (5) du dispositif d'ultra- ou de microfiltration (1) comporte un dispositif de mesure (21) destiné à mesurer la capacité de filtration et relié par une ligne de mesure (22) au système régulateur (13).

8. Installation selon la revendication 6 ou 7, caractérisée en ce que le dispositif de mesure (21) pour le flux est prévu en plus du dispositif de mesure pour la fraction de solides et les deux dispositifs de mesure (21, 11) sont connectés par les lignes de mesure (22, 12) au système régulateur (13).

9. Installation selon une des revendications 6 à 8, caractérisée en ce que le système régulateur (13) est connecté par une ligne de commande (14) à une vanne de réglage (15) qui est installée, pour la régulation du débit de retentat déchargé, dans une conduite de décharge de retentat (10) branchée sur le circuit de recyclage de retentat (2, 3, 4).

10. Installation selon une des revendications 6 à 8, caractérisée en ce que le système régulateur (13) est connecté par une ligne de commande (16) à une vanne de réglage (17) qui est installée pour la régulation de l'alimentation en jus frais dans une conduite d'alimentation en jus frais (18) menant à un réservoir de charge (6).

Fig. 1

EP 0 333 807 B1

Fig. 2

EP 0 333 807 B1

Fig. 3